# EUROPEAN PATENT APPLICATION

(11) **EP 2 110 930 A2**
(43) Date of publication of application: **21.10.2009**
(21) Application number: 09075095.1
(22) Date of filing: 23.03.2009
(51) Int. Cl.: H02K 7/18

(54) **Electricity generating device**

(30) Priority: 15.04.2008 GB 0806759
(71) Applicant: Okamoto, Haruo, London SW3 4NG (GB)
(72) Inventor: Okamoto, Haruo, London SW3 4NG (GB)

(57) **Abstract**

This invention is about a step-on electric current generation device. When a weight such as a human body steps on the device, the weight forces movement of the device and mechanical linkages converts mechanical energy into electrical energy via an electrical generator.

## Description

This invention is about an electricity generating device which utilises weight to produce electricity.

### Background of the invention

There are many situations where electric power is used, for example, an electronic bathroom scale requires battery power to function; a door bell is normally connected to the mains power supply. All those devices are infrequently used; however even in the unused state they still consume a certain amount of electricity, hence causing potential energy wastage. As the energy resources are getting more expensive and the environmental impact of energy usage gets worse, this invention aims to reduce the dependence of those types of devices on non-renewable energy.

### Current situation

Many products use either batteries or the mains power supply, such as an electronic bathroom scale and door bell system. The door bell system normally involves a transformer to reduce the mains voltage to a safe level, which will consume power even when not used. Some garden path lighting uses solar power stored during the day. This kind of system works well in areas with long sunlight periods and good weather. It cannot cope well with winter climate when it could probably be most appreciated.

### This invention

In this invention a mechanical device converts movement caused by application of force, for example body weight when the device is stepped by a human being, a dog, a vehicle, or item, into electricity. The electricity can then be used to power up circuitry in a bathroom scale, to ring a buzzer of a door bell, or to light up or mark up a garden path or drive way, for example, using LED lights. Those are just a few examples.
The said mechanical device is preferably in a shape of tile or slab with broad upper and lower surfaces. When a weight, such as a human body stepping on to the said tile shaped device, is applied to the said upper surface a deformation results. The said deformation can be a surface distortion, or a relative movement between the said upper and the said lower surface. The said deformation or movement is then converted into electric current by electricity generating means. The said electricity generating means is preferably, but not limited to, of an electromagnetic induction type with permanent magnet.

### Detailed description of the invention

The invention is further explained in detail in the following embodiments.

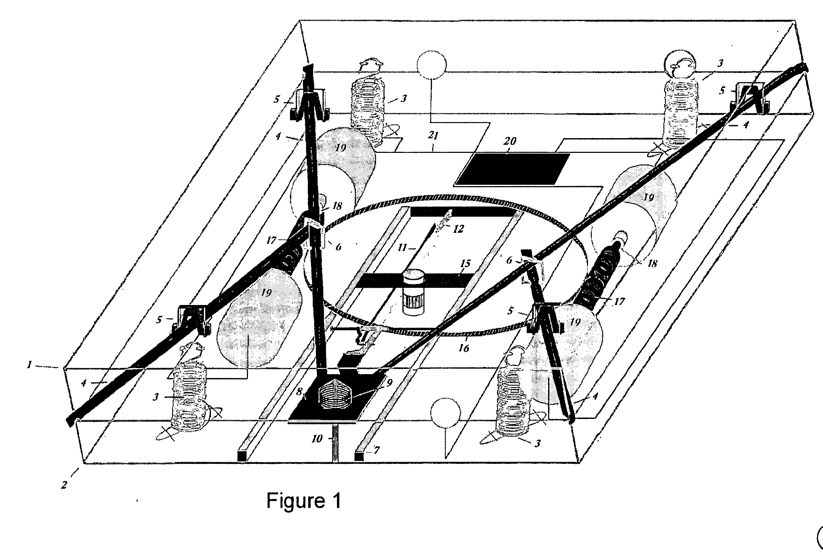

In the first embodiment, the invention is composed of two parts, not dissimilar to a tile or slab in shape. A non slip surface would be preferable, made of, for example but not limited to, metal. They will be referred to as the upper (1) and lower casing (2) hereafter. The structure is shown in figure 1.

Within the said upper casing and lower casing lay slots or holes where extension springs (3) hook in the said holes in the said upper casing. The other ends of the said extension springs are located through holes or slots in the lower casing. The springs lock the said upper and lower casing together.

Four levers (4) are held within the casing, either over the lower casing's edges or unlike figure 1 is laid onto brackets fixed onto the lower casing's interior. Four brackets and bracket holders (5) are fixed onto the interior of the upper casing and over the said lever's keeping the upper casing supported and held securely over the levers and maintain the levers stability.

Two lower levers are attached to the two upper levers with metal latches (6). Both the four levers support the upper casing's brackets. The fitting of the four brackets allow the force applied to the upper casing's to be transferred efficiently, evenly through the levers.

A U-shaped stabilizing bar (7) barrier's the following system and key components at the centre of the lower casing. The two said upper levers are connected through a main lever: the spring plate (8). Held horizontally, the said spring plate holds a compression spring (9) coiled around a hole within the centre of that said spring plate. A spring support (10) supported from the lower casing holds the said compression spring upright.

The inside of the cross member of the U-shaped bar is connected from a toothed rack (11) and held elevated by one or more extension springs (12). Spring holes are located in the cross member of the U-shaped bar and the toothed rack. The toothed rack links to the rack in the rack and pivot assembly (13).

A fulcrum piece (14) is fitted with rods in to rod holes in the parallel sides of the U-shaped stabilizing bar it's attached to the said toothed rack on its lower end side while the higher end's side rest's above the board of the said spring plate.

When the downward force from the upper casing is applied it travels through the levers.
The levers descend pulling with it the spring plate, under the stress the compression spring will compress. As the spring plate descends the upper end side of the fulcrum attached to the spring plate's board is released from its held height. Acting under the force of gravity it falls with the spring plate. This allows its rod's to rotate about the parallel bars held within the U- shaped cross section lever. The fulcrum acts like a swing or pendulum under gravity. Furthermore as the fulcrums lower end side is swung forward the tension from the extension spring will pull the toothed rack towards the cross member of the U-shaped stabilizing bar where the other side of the extension spring is hooked. The toothed rack will be pulled along the rack and pivot assembly.

When the force on the surface of the device is no longer acting the said compression spring subjects to the compressive stress and returns to its original shape, its larger vertical force over exceeds that of the horizontal tension by the smaller extension spring within the plain resulting in an upward return for the spring plate. Therefore the fulcrums swing reverse as it's pulled back to its original position. The fulcrum therefore returns the toothed gear backward as the extension spring retracts. This causes the toothed gear to be moved both clock-wise and anti-clockwise.

Unless pressure is applied to the upper surface the magnitude of the forces rests the system in balance, equilibrium.
A Metal sheet (15) is held over the parallel sides of the U-shaped bar covering and securing in place the said rack and pivot assembly. The said pivot turns a toothed gear (16). The Said toothed gear will then drive one or more worm gears (17). A worm gear covers the shaft (18) of one or more permanent magnetic generator's (19) which must be small enough to be fitted into the casing. The said generator or generators will be fixed to the lower casing. When the upper casing is pressed under weight, a movement turns the generator or generators via the described gear linkage, Electric current therefore is generated.

An electronics circuit board (20) is disposed within the upper and lower casing the said circuit conditions the electric current to a usable format. The electric circuit is preferably at least a rectifier and charge storage device. Only a charge storage device is preferred if the generator is of DC type. A Regulator might be also included for some applications.

In the second embodiment, as in the above embodiments, an electrical linkage means (21) are provided within the device casings. The said electrical linkage means can connect similar devices of this invention together to form an electricity generating network. An electronics circuit is disposed within the device, preferably consisting of rectifier and isolating diode. The said electrical linkage means could be plug and socket type connection disposed on one or more of the side surfaces of the casings.

In all the embodiments, electrical conducting wires, which could be part of the electrical linkage means, within the casing also connect the said generator or generators to the said circuit board.

This invention is described by way of embodiments. However within the spirit of this invention alternative embodiments exist. For example the levers can either be
Arranged whereby they are held inside the casing over metal supports built onto the lower casing; the gear linkage can be belt and pulley, sprocket, toothed gears, bevel gears or chains.

### Explanation of drawing:

1) Upper casing
2) Lower casing
3) Extension springs
4) Levers
5) Brackets and brackets holders
6) Latches
7) U shaped metal plate
8) Main lever or spring plate
9) Compression Spring
10) Spring support
11) Toothed Rack
12) Extension Spring
13) Rack and Pivot assembly
14) Fulcrum
15) Securing metal sheet
16) Toothed gear
17) Worm gear
18) Shaft
19) Generator
20) Circuit board
21) Wires

## Claims

1. A step-on electricity generating device, consisting of a lower and an upper casing wherein disposed of a mechanical linkage means, an electric current generating means.

2. As in claim 1, the mechanical linkage means consists of at least one gear and one rack.

3. As in claim 1 wherein the mechanical linkage means consists of at least one pulley and at least one belt.

4. As in claim 1 wherein the mechanical linkage means consists of at least one sprocket and at least one belt.

5. As in claim 1, the electric current generating means consist at least one electromagnetic induction type generator and at least one circuit board.

6. As in all the above claims, wherein provided at least one electrical interconnecting means.
The electrical inter-connection means connects one step-on electricity generating device to at least one other step-on electricity generating device.

7. As in claim 6, wherein the interconnection means are disposed in such a way that a matrix of the step-on electricity generating device can be formed.

8. As in claim 6, wherein the electrical interconnection means is of plug and socket type.
